(19)

Europäisches
Patentamt
European
Patent Office
Office européen
des brevets

(11) **EP 2 290 776 A1**

(12) **EUROPEAN PATENT APPLICATION**

(43) Date of publication:
**02.03.2011 Bulletin 2011/09**

(21) Application number: **09010147.8**

(22) Date of filing: **06.08.2009**

(51) Int Cl.:
*H02H 7/08* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **16.07.2009 EP 09009261
23.03.2009 EP 09004087
19.06.2009 EP 09008014**

(71) Applicant: **ABB AG
68309 Mannheim (DE)**

(72) Inventors:
• **Andenna, Andrea
5405 Baden Daetwill (CH)**
• **Müller, Peter O.
69221 Dossenheim (DE)**
• **Ukil, Abhisek
5405 Baden (CH)**

(54) **Thermal overload relay with voltage-based protection features**

(57)    The invention is about an overload protection device (30) to protect an electric load (20), especially an induction motor (20), in a load circuit made up by an electric supply line (A) providing a load current and the electric load (20), the device comprising
- first means (31) for deriving a load current measurement signal (311),
- second means (33) for deriving an overload indicator signal (331)
based on said load current measurement signal (311),

wherein said overload protection device (30) further comprises
- a voltage measuring circuit (40) for measuring the supply line voltage and deriving a voltage signal (401), and
- a voltage unbalance diagnostic circuit (41) which is configured to detect and evaluate a supply line voltage unbalance and to produce a fault indication signal (411) when the evaluation of the supply line voltage unbalance satisfies a predetermined condition.
    The invention is further about a method to be used with such an overload protection device.

Fig. 2

**Description**

The invention is about an overload protection device to protect an electric load, especially an induction motor, in a load circuit, said load circuit comprising an electric supply line providing a load current and the electric load, said device comprising first means for deriving a load current measurement signal, and second means for deriving an overload indicator signal based on the load current measurement signal, according to the preamble of claim 1.

The invention is further about a motor controller, providing motor control and motor protection functions, comprising such an overload protection device.

Even further the invention is about a method to be used with an overload protection device to protect an electric load, especially an induction motor, in a load circuit, said load circuit comprising an electric supply line providing a load current and the electric load, the device comprising first means for deriving a load current measurement signal, and second means for deriving an overload indicator signal based on the load current measurement signal.

Finally the invention is about a computer program and a computer program product with program code configured to execute such a method, if the program is run on a computer or microprocessor.

A low voltage overload protection device, also called overload protection relay, protects an industrial motor, for example an induction motor, against possible overloads, excessive overcurrent etc.

Examples for electronic overload relays are shown in DE 197 48 627 A1 and EP 0 477 959 A2. The electronic overload relays shown there comprise a microprocessor, which includes in its application program the thermal model and which calculates the motor temperature from the measurement signal of motor current and time.

An intelligent motor controller, like a product from a product family sold by the company ABB under the name Universal Motor Controller UMC, or other motor controllers, comprises an electronic overload relay and offers motor protection and motor control functions of fixed speed motors in one device. Such motor controllers are frequently integrated in a process control system with the help of a fieldbus connection, e.g. the so-called Modbus. Via such a connection the control system can control the motor from remote and can also read out diagnosis information, e.g. the number of protection trips. Because of their features intelligent motor controllers are often used in applications where unplanned downtimes can be very costly, for example in the chemical or petrochemical process industry.

Intelligent motor controllers protect all sizes of standard motors with nominal currents ranging from e.g. 240mA to up to 850A. Usually they are installed in so called motor control centres, and in larger plants hundreds of them might be used. Therefore their design is very cost sensitive and optimized for low cost.

The overload protection in low voltage overload protection relays is typically done by measuring the motor current and judging how much it is more than the nominal current. A thermal model algorithm calculates the thermal load and checks whether or not it surpasses a certain threshold based on the nominal current.

After a motor failure has appeared, motor diagnosis information is often used to find out the cause for the failure. For cost reasons, users of motors are more and more interested to get motor diagnosis information before a critical fault actually happens. This gives time to organize spare parts etc.

Known motor controllers and known electronic overload protection devices are mainly focussed to protect and control a motor. They in some versions can also read out controller diagnosis information, like the number of protection trips that have occurred. Based on further special thermal models intelligent motor controllers can provide information about operating conditions, like for example earth faults, phase loss, current unbalance, etc.

But they are not able to determine safe operating conditions of the motor, or, in other words, predict and detect unnormal operation conditions, like increase of losses, derating, occurrence of torsional vibrations. Alternatively special measurement equipment could be mounted to the motor on a temporary basis, e.g. vibration analysis tools, to find out if there will be a problem coming with the motor. This is not cost efficient for low cost low voltage motors, and cannot be left at the motor for a continuous and real-time fault diagnosis and fault prediction during normal motor operation.

It is an objective of the present invention to further improve an electronic overload protection device so that it can be used for low-cost, on-line motor diagnosis and fault prediction purposes.

It is a further objective of the present invention to provide an improved motor controller, providing motor control and motor protection functions, so that it additionally provides low-cost, on-line motor diagnosis and fault prediction functions.

It is an even further objective of the present invention to provide a method to be used with an overload protection device allowing to produce on-line motor diagnosis and fault prediction information from the overload protection device.

Finally it is an objective of the present invention to provide a computer program and a computer program product with program code configured to execute the method to be used with an overload protection device allowing to produce on-line motor diagnosis and fault prediction from the overload protection device.

The invention consists in an overload protection device mentioned in the preamble of claim 1 that further comprises a voltage measuring circuit for measuring the supply line voltage and deriving a voltage signal, and a voltage unbalance diagnostic circuit which is configured to detect and evaluate a supply line voltage unbalance and to produce a fault indication signal when the evaluation of the supply line voltage unbalance satisfies a predetermined condition.

Hence, it is the advantage of this invention that supply side voltage measurement in conjunction with supply side voltage unbalance detection is used for motor diagnostic purposes alongside low voltage overload protection relays with limited measurement and computational resources. This enables diagnosis of low voltage motors during their normal operation, being functional in real time while the relay is in operation, and helps to detect problems early and to schedule maintenance actions in time. In other words, the core idea of the invention is to extend the utilization of supply line voltage measurement, which in the prior art is done sometimes only for power calculation, for advanced motor diagnostics. Examples for advanced motor diagnostics that can be done using a device according to the invention comprise determination of a derating factor, increase of losses or winding temperature or torsional vibrations, etc., based on supply line voltage unbalance detection or analysis. Up to now such motor diagnostics features could not be used with small overload protection devices.

In accordance with a further feature of the invention, said voltage unbalance diagnostic circuit comprises a voltage unbalance computation circuit which is configured to produce a voltage unbalance factor or a complex voltage unbalance factor using symmetrical component analysis of the supply line voltage signal, and to produce a voltage unbalance signal.

In accordance with a further feature of the invention, said voltage unbalance diagnostic circuit comprises a Total Harmonic distortion calculator which is configured to calculate the power of harmonic oscillations with higher order than the fundamental oscillation of the supply line voltage, and which produces a total harmonic distortion signal from that calculation.

In accordance with a further feature of the invention, said device comprises a voltage sag detection circuit configured to produce a voltage sag indicator signal from the supply line voltage measurement signal.

In accordance with a further feature of the invention, said voltage unbalance diagnostic circuit further comprises an A/D-converter, and/or a Fourier Transform Calculator configured to perform a discrete Fourier Transformation or a Fast Fourier transformation (FFT) of the supply line voltage measurement signal, and/or a Root Mean Square calculator configured to calculate the root mean square value of the supply line voltage measurement signal.

In accordance with a further feature of the invention, said voltage unbalance diagnostic circuit further comprises a voltage unbalance signal processing unit configured to produce the fault indication signal when the total harmonic distortion signal or the voltage unbalance signal or both satisfy a predetermined condition.

The invention further consists of a motor controller, providing motor control and motor protection functions, comprising an overload protection device to protect an electric load, especially an induction motor, in a load circuit comprising an electric supply line providing a load current and the electric load, the device comprising first means for deriving a load current measurement signal, and second means for deriving an overload indicator signal based on the load current measurement signal, that further comprises a voltage measuring circuit for measuring the supply line voltage and deriving a voltage signal, and a voltage unbalance diagnostic circuit which is configured to detect and evaluate a supply line voltage unbalance and to produce a fault indication signal when the evaluation of the supply line voltage unbalance satisfies a predetermined condition.

The invention further consists of a method to be used with an overload protection device to protect an electric load, especially an induction motor, in a load circuit comprising an electric supply line providing a load current and the electric load, the device comprising first means for deriving a load current measurement signal, and second means for deriving an overload indicator signal based on the load current measurement signal, the method comprising the steps of measuring the supply line voltage and deriving a supply line voltage measuring signal, detecting a supply line voltage unbalance, evaluating the supply line voltage unbalance, producing a fault indication signal when the evaluation of the supply line voltage unbalance satisfies a predetermined condition.

In accordance with a further feature of the invention the method comprises the further step of determining a voltage unbalance factor (VUF) or a complex voltage unbalance factor (CVUF) using symmetrical component analysis of the supply line voltage signal.

In accordance with a further feature of the invention the method comprises the further step of producing a supply voltage quality indication from the voltage unbalance factor or the complex voltage unbalance factor, and producing the fault indication signal when the supply voltage quality indication satisfies a predetermined condition.

In accordance with a further feature of the invention the method comprises the further step of producing a safe operating conditions indication and/or a derating factor from the voltage unbalance factor and producing the fault indication signal when the safe operating conditions indication and/or the derating factor satisfies a predetermined condition.

In accordance with a further feature of the invention the method comprises the further step of deriving a total harmonic distortion factor (THD) from the power of harmonic oscillations with higher order than the fundamental oscillation of the supply line voltage.

In accordance with a further feature of the invention the method comprises the further step of producing a losses and/or winding temperature and/or Torsional vibration indicator from the total harmonic distortion factor (THD), and producing the fault indication signal when the losses and/or winding temperature and/or Torsional vibration indicator satisfies a predetermined condition.

Finally the invention consists of a computer program and a computer program product with program code configured to execute a method to be used with an overload protection device to protect an electric load, especially an induction motor, in a load circuit comprising an electric supply line providing a load current and the electric load, the device comprising first means for deriving a load current measurement signal, and second means for deriving an overload indicator signal based on the load current measurement signal, the method comprising the steps of measuring the supply line voltage and deriving a supply line voltage measuring signal, detecting a supply line voltage unbalance, evaluating the supply line voltage unbalance, producing a fault indication signal when the evaluation of the supply line voltage unbalance satisfies a predetermined condition , if the program is run on a computer or microprocessor. The program would according to the invention be run as part of the application program of the microprocessor within the electronic overload protection device.

The supply side voltage can have significant impact on induction motor operations. Therefore, these voltage-based features can be key parameters to determine safe motor operation conditions, particularly in conjunction with a thermal overload relay. Some of the supply line voltage unbalance evaluations influencing induction motor operation and their predetermined conditions that indicate a fault according to the invention are mentioned below.

Unbalanced supply voltage can be caused by incomplete transposition of transmission lines, unbalanced loads, open delta transformer connections, blown fuses on three-phase capacitor banks and so on. Any unbalance in the supply voltage to an induction motor causes increased losses and consequently results in an increase in the winding temperature of the induction motor. This can cause insulation damage and motor faults. Besides, unbalanced supply has considerable negative effects on the steady state performance of an induction motor, causing a reduction in efficiency, torque etc..

Unbalanced supply voltage increases the negative sequence component of the voltage, which generates a reverse rotating air gap field in the opposite direction of the rotor rotation. The mentioned undesirable effects of the unbalanced voltage upon the performance of the motor are produced by this reverse field. This can be analyzed using symmetrical components. The composite feature to detect unbalance is known as voltage unbalance factor (VUF). VUF is given by

$$(1) \qquad\qquad VUF = \left| \frac{U_-}{U_+} \right| 100\%$$

where, $U_-$ is the negative sequence component of the voltage and $U_+$ the positive sequence one. A more precise parameter would be the complex voltage unbalance factor (CVUF), given as,

$$CVUF = \frac{U_{L-}}{U_{L+}} = K_u \angle \theta_u \,,$$

or,

$$(2) \qquad\qquad CVUF = \frac{V_-}{V_+} = K_v \angle \theta_v \,.$$

where $U_{L-}$ is a negative sequence of a line voltage component, $U_{L+}$ is a positive sequence of a line voltage component, $V_-$ is a negative sequence of a line to neutral voltage component and $V_+$ is a positive sequence of a line to neutral voltage component. The $K_u$ and $K_v$ parameters describe the magnitude and $\theta_u$ and $\theta_v$ the angle of the CVUF.

It is to be noted that a different definition of 'voltage phase unbalance' has been reported as follows

$$(3) \qquad\qquad Unbalance = \left| V_i - V_{avg} \right| / V_i \times 100\%, \quad i = 1,2,3.$$

From (3) it can be seen that the unbalance here is checked by computing the difference between the average of three-phase voltages with individual phase voltages, and then checking the differences against a pre-defined threshold to indicate any voltage phase imbalance warning. However, this is not meant by the "voltage phase unbalance" in the sense of this invention. VUF in the sense of the present invention involves a rigorous symmetrical component analysis to compute explicitly the positive and the negative phase sequence components of the supply-side voltage. From the theory, the voltage unbalance is caused by the presence of the negative phase sequence component. Hence its ratio to the positive sequence one is the theoretically correct measure of the supply-side voltage unbalance.

Therefore, from the measured voltage in an overload protection relay, the VUF or CVUF can be calculated using symmetrical component analysis. These factors can then be utilized to indicate the quality of the supply voltage. And as per National Electrical Manufacturers' Association (NEMA) Standard MG1, 12.45 1987, VUF or CVUF can be directly used to indicate the safe operating conditions. For example, VUF of 5% has been found to result in a winding temperature increase of 15K - 25K. More than 6% VUF has been found to be very critical for induction motor operation. A 6% VUF has been reported to reduce efficiency by 2%.

As a further protection, NEMA suggests to adopt a derating factor based on the VUF. A motor with a 5% VUF has been reported to be derated to 89%. Therefore, calculation of VUF or CVUF in an overload protection device are highly beneficial for motor protection.

A distortion in the supply voltage waveform is mainly caused by the presence of the higher harmonic (3rd, 5th, 7th, 9th, 11th, 13th) components. These harmonic components contribute to the total harmonic distortion (THD), creating a waveform distortion. Usage of thyristor inverters, nonlinear power electronic loads like static rectifiers, adjustable speed drives, DC/AC converters, etc are main source of such THD. As an effect of THD, the power losses increase in the induction motor, causing significant temperature rise and consequently damage to the insulation. Distorted supply voltage can also significantly affect the torque output.

Total harmonic distortion (THD) calculates the power of all harmonics higher than the fundamental one. Significant presence of the higher harmonics causes voltage disturbance, increasing the losses. Therefore, the calculated value of THD can be a direct measure of the problem.

For computation of the THD, basically the root mean square (RMS) value and the discrete Fourier transform (DFT) for the 1st harmonic (fundamental) component are calculated. If for example the RMS value is $\overline{V}_k$, and the 1st harmonic is $v_k$, then THD is given as

$$V_{THD,k} = \sqrt{\overline{V}_k^2 - V_k^2} \; ,$$

$$(4)$$

$$(5) \qquad THD_k = \left( \frac{V_{THD,k}}{\overline{V}_k^2} \right) 100\% \; .$$

For higher THD, the losses and the winding temperature of the motor will increase significantly. This will decrease the motor efficiency and could also cause serious damage to the insulation and the motor. Additionally, distorted voltage supply can introduce excessive torsional vibration. This can cause fatigue and fracture shafts, prematurely destroy couplings and lower the machine efficiency.

Additionally, voltage sag is a common power quality issue and affects induction machines largely. Voltage sags are brief reductions in voltage magnitude, lasting from a cycle up to a minute. A voltage sag can cause an induction motor loss of torque, deceleration, and overcurrent. If the voltage sag lasts sufficiently long, the motor may stall. Any of these effects can result in interruptions of production processes. There are also potential hazards to damage the motor.

The invention is now described in more detail with reference to embodiments thereof given by way of example and shown in the appended drawings.

Brief description of the drawings

Fig. 1    is a block diagram of a load circuit comprising an electric supply line, a motor, a contactor and an overload protection device,

Fig. 2    is a block diagram of an electronic overload protection device according to an embodiment of the invention, and

Fig. 3     is a block diagram of a voltage unbalance diagnostic circuit as part of an electronic overload protection device according to fig. 2.

Detailed description of the preferred embodiments

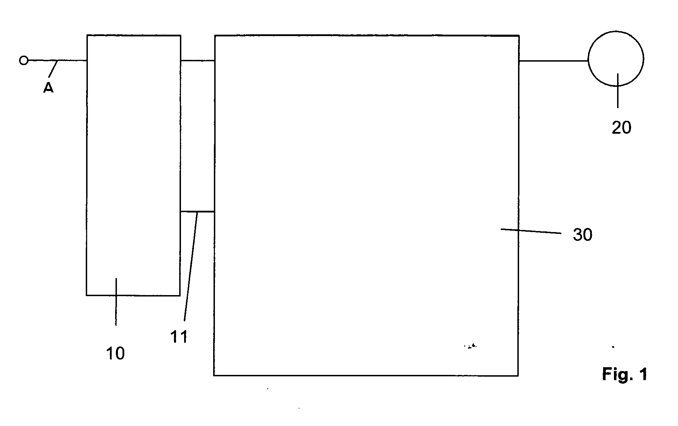

With initial reference to figure 1, a load circuit is shown comprising an electric supply line A providing a load current and an electric load 20. The supply line A is coupled to a source of alternating electricity (not shown). The single supply line A is shown representing a single phase or a three phase system. The functionality of the overload protection device would not be affected by the application in a three phase electrical system. In a three phase system either a 3-phase overload protection relay or three single-phase overload relays in parallel would be used.

The supply line A is connected to a load in form of a motor 20 by a contactor 10 and an overload protection device 30. In case of a three phase system the motor 20 is a fixed speed motor, also described as induction motor, and in principle known since long time. The contactor has an internal set of contacts (not shown) coupling the supply line to the overload protection device and the motor. The contactor receives an activation signal via a signal line 11 from the overload protection device 30. The signal line 11 can be an electric signal path or a mechanical coupling. In case the overload protection device 30 detects an overload situation, it transmits an activation signal to the contactor, as a result of which the internal contacts of the contactor are activated to interrupt the power supply to the motor 20. Of course other embodiments of motor protection are possible, for example the contactor functionality could be integrated into the overload protection device.

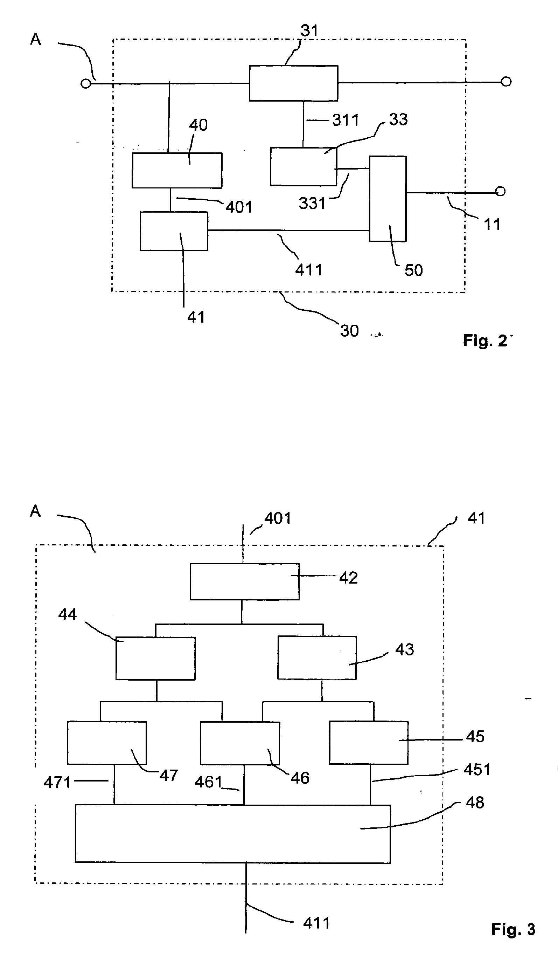

Fig. 2 shows a block diagram of an electronic overload protection device 30. The supply line A enters and leaves the device 30 at input and output connection terminals. In between them there are first means 31 for deriving a load current measurement signal 311. The first means 31 may be known current measurement electronic circuitry combined with digital signal processing, implemented by using a microprocessor (not shown explicitly in the figure). Second means 33 are there for deriving an overload indicator signal 331 based on the load current measurement signal 311. The second means 33 can be a thermal model algorithm implemented as a module within the application program of the microprocessor.

Additionally, there is a voltage measuring circuit 40 for deriving a voltage signal 401. The voltage signal 401 is entering a voltage unbalance diagnostic circuit 41 which is configured to detect and evaluate a supply line voltage unbalance and produce a fault indication signal 411 when the evaluation of the supply line voltage unbalance satisfies a predetermined condition. For example, the condition can be to produce a fault indication signal 411 when the VUF is exceeding 5%.

Both the overload indicator signal 331 and the fault indication signal 411 are fed to a voltage unbalance signal processing circuit 50. This circuit also can comprise an algorithm implemented as a module within the application program of the microprocessor. It may also comprise a display unit displaying the overload indication and the fault indication, and displaying additionally further information like current, voltage, power, power factor etc, or historical diagnosis information like number of tripping events during the last months etc. It can also comprise a communication circuit for feeding the information via a field bus, a serial connection, a two-wire line, a wireless transmitting line etc. to a remote control room. The voltage unbalance signal processing circuit 50 also can produce the activation signal for the contactor 10 and feed it to the signal line 11.

The core of the invention is the determination of voltage-based diagnostics features like the VUF, THD, voltage sags, etc. Computation and integration of this type of functionalities in low end motor controllers and overload protection devices for the purpose of motor protection are a novel and innovative approach.

Figure 3 shows the overall signal processing computation architecture of the voltage unbalance diagnostic circuit 41 in a block diagram. The digital voltage samples are acquired from an analogue to digital converter (ADC) 42 and the root mean square (RMS) value is computed in a RMS calculator 44. In parallel the first harmonic can also be computed using a Discrete Fourier Transform (DFT) calculator 43. As shown in the previous sections, the VUF is a function of the first harmonic, so a voltage unbalance computation circuit 45 is connected to the DFT calculator 43. Sags and swells can be detected using the RMS values, so a voltage sag detection circuit 47 is connected to the RMS calculator 44. The THD is a function of both RMS and first harmonic, so a total harmonic distortion calculator 46 is connected to both the RMS calculator 44 and the DFT calculator 43. The three functions (Sags, VUF and THD) can thus in principle be computed in parallel. The respective signals, the sag indicator signal 471, the total harmonic distortion signal 461 and the voltage unbalance signal 451 are fed to a diagnostic display unit 48, where they can be displayed, further processed to generate a fault indication signal 411 and/or further transmitted.

In summary the voltage unbalance diagnostic circuit 41 computes:

o Voltage RMS values (3 values, one per phase)
o Voltage first harmonic (3 values, one per phase)
o Voltage Total Harmonic Distortion (3 values, one per phase)

o Symmetrical components of the 3-phase voltage system (Positive, Negative and Zero sequences)
o Voltage Unbalance Factor
o Voltage sags and swells identification and logging

In the following each of the above parameters is defined and an embodiment for implementation scheme is specified.

*RMS Voltage Values:*

Consider N samples sm,k of the phase voltage k in a three-phase system, where m is the sample index. The Root Mean Square (RMS) voltage value is defined as

$$(6) \qquad \bar{v}_k = \sqrt{\frac{1}{N}\sum_{m=0}^{N-1} s_{m,k}^2} \quad k = 1,2,3$$

Theoretically, the samples in half sine wave period are enough to compute the RMS value. Using one or more periods produces in general a more stable output.

*RMS Implementation, Batch mode:*

The values are updated each N samples. In order to have a stable RMS value, N should be an integer multiple of the number of samples in half-period.

$$(7) \qquad \bar{v}_k^2 = \frac{1}{N}\sum_{m=0}^{N-1} s_{m,k}^2$$
$$\bar{v}_k = \sqrt{\bar{v}_k^2} \qquad k = 1,2,3$$

*RMS Implementation, Recursive mode:*

The values are updated at each new sample. For efficiency reasons the sum $t_{2k}$ is updated only adding the contribution of the newest sample (index g) and subtracting the oldest sample one (index h). Also in this case the number N of samples of the sum should be an integer multiple of the number of samples in half-period.

$$t_k^2 = t_{k,old}^2 + s_{k,g}^2 - s_{k,h}^2$$
$$(8) \qquad \bar{v}_k^2 = \frac{1}{N} t_k^2$$
$$\bar{v}_k = \sqrt{\bar{v}_k^2} \qquad k = 1,2,3$$

*First harmonic*

If we consider one specific phase voltage k, the first harmonic is defined as the first complex DFT component of the corresponding sampled signal. The following definition expresses the first harmonic in terms of its real and imaginary parts and defines its module.

$$V_k = v_{r,k} + jv_{i,k}$$

$$v_{r,k} = \frac{\sqrt{2}}{N_T} \sum_{m=0}^{N_T-1} s_{m,k} \cos\left(\frac{2\pi mn}{N_T}\right)$$

(9)

$$v_{i,k} = \frac{\sqrt{2}}{N_T} \sum_{m=0}^{N_T-1} s_{m,k} \sin\left(\frac{2\pi mn}{N_T}\right)$$

$$v_k = \sqrt{v_{r,k}^2 + v_{i,k}^2} \qquad k = 1,2,3$$

*First harmonic implementation, Batch mode*

The values are updated each NT samples. In order to stable DFT values, NT should be an integer multiple of the number of samples in one period.

$$v_{r,k} = \frac{\sqrt{2}}{N_T} \sum_{m=0}^{N_T-1} s_{m,k} \cos\left(\frac{2\pi mn}{N_T}\right)$$

(10) $$v_{i,k} = \frac{\sqrt{2}}{N_T} \sum_{m=0}^{N_T-1} s_{m,k} \sin\left(\frac{2\pi mn}{N_T}\right)$$

$$v_k^2 = v_{r,k}^2 + v_{i,k}^2$$

$$v_k = \sqrt{v_k^2} \qquad k = 1,2,3$$

First harmonic implementation, Recursive mode

The values are updated at each new sample. For efficiency reasons the sums wr,k and wi,k are updated only adding the contribution of the newest sample (index g) and subtracting the oldest sample one (index h). Also in this case the number NT of samples of the sum should be an integer multiple of the number of samples in one period.

$$w_{r,k} = w_{r,k,old} + s_{k,g} \cos\left(\frac{2\pi g}{N_T}\right) - s_{k,h} \cos\left(\frac{2\pi h}{N_T}\right)$$

$$w_{i,k} = w_{i,k,old} + s_{k,g} \sin\left(\frac{2\pi g}{N_T}\right) - s_{k,h} \sin\left(\frac{2\pi h}{N_T}\right)$$

(11) $$v_{r,k} = \frac{\sqrt{2}}{N_T} w_{r,k}$$

$$v_{i,k} = \frac{\sqrt{2}}{N_T} w_{i,k}$$

$$v_k^2 = v_{r,k}^2 + v_{i,k}^2$$

$$v_k = \sqrt{v_k^2} \qquad k = 1,2,3$$

*Voltage Unbalance Factor (VUF)*

The theory of Symmetrical Components states that every 3-phase unbalanced system can be split into the superposition of three different 3-phase systems (called respectively positive, negative and zero sequence systems). The first two components are two balanced 3-phase systems rotating in opposite directions, the third component is only present when the vectorial sum of the phasors of the 3-phase system is not zero. In a perfectly balanced system both negative and zero sequence systems would be absent. Let Vp be the phasor of one of the three phases in the Positive Phase Sequence (PPS). The second and third phasors in the PPS are equal to Vp rotated respectively by 240 and 120 degrees in counterclockwise direction. Similarly, for the Negative Phase Sequence (NPS) the second and third phasors are equal to Vn rotated respectively by 120 and 240 degrees in counterclockwise direction. The three phasors of the Zero Phase Sequence (ZPS) are equal to V0. So, the symmetrical componets are completely defined by the three complex numbers Vp, Vn and V0. Let their real and imaginary parts and their module be the following.

$$(12) \qquad \begin{aligned} V_p &= v_{r,p} + j v_{i,p} \\ V_n &= v_{r,n} + j v_{i,n} \\ V_0 &= v_{r,0} + j v_{i,0} \end{aligned}$$

$$(13) \qquad \begin{aligned} v_p &= \sqrt{v_{r,p}^2 + v_{i,p}^2} \\ v_n &= \sqrt{v_{r,n}^2 + v_{i,n}^2} \\ v_0 &= \sqrt{v_{r,0}^2 + v_{i,0}^2} \end{aligned}$$

The Voltage Unbalance Factor (VUF) is defined as the ratio between the modules of NPS and PPS expressed as percentage. -

$$(14) \qquad VUF = 100 \frac{v_n}{v_p}$$

It can be proven that the symmetrical components can be computed from the first harmonic phasors with the formula

$$(15) \qquad \begin{pmatrix} V_p \\ V_n \\ V_0 \end{pmatrix} = \frac{1}{3} \begin{pmatrix} 1 & R & R^2 \\ 1 & R^2 & R \\ 1 & 1 & 1 \end{pmatrix} \begin{pmatrix} V_1 \\ V_2 \\ V_3 \end{pmatrix}$$

where the rotation vector R is defined as

$$(16) \qquad R = e^{-j\frac{2\pi}{3}}$$

*Total Harmonic Distortion (THD)*

If we consider one specific phase voltage k, the Total Harmonic Distortion THDk is defined as the ratio (in percent terms) of the square root of the power of the higher harmonics1 and the square root of the power of the first harmonic. The power of the higher harmonics can be expressed as the total power minus the power of the first harmonic, and the total power is actually the square of the RMS value. The following formula expresses this definition.

$$(17) \qquad v_{thd,k} = \sqrt{\overline{v}_k^2 - v_k^2}$$

$$THD_k = 100 \frac{v_{thd,k}}{v_k^2} \qquad k = 1,2,3$$

Of course, it is also possible to have only one function, e.g. the voltage unbalance computation function, realised in one voltage unbalance diagnostic circuit. Even further, it also possible to have several voltage unbalance diagnostic circuit, one for determining a voltage unbalance signal 451, one for determining a total harmonic distortion signal 461, and one for determining a sag indicator signal 471, for example, in parallel.

List of reference numerals

A          Supply line
10         contactor
11         signal line
20         motor, load
30         electronic overload protection device
31         first means
33         second means
40         voltage measuring circuit
41         voltage unbalance diagnostic circuit
42         A/D converter
43         DFT Calculator
44         RMS calculator
45         Voltage unbalance computation circuit
46         Total harmonic distortion calculator
47         voltage sag detection circuit
48         diagnostic display unit
50         voltage unbalance signal processing unit
311        load current measurement signal
331        overload indicator signal
411        fault indication signal
401        voltage signal
451        Voltage unbalance signal
461        Total harmonic distortion signal
471        sag indicator signal

**Claims**

1. Overload protection device (30) to protect an electric load (20), especially an induction motor (20), in a load circuit made up by an electric supply line (A) providing a load current and the electric load (20), the device comprising

    - first means (31) for deriving a load current measurement signal (311),
    - second means (33) for deriving an overload indicator signal (331) based on said load current measurement signal (311),

wherein said overload protection device (30) further comprises

- a voltage measuring circuit (40) for measuring the supply line voltage and deriving a voltage signal (401), and
- a voltage unbalance diagnostic circuit (41) which is configured to detect and evaluate a supply line voltage unbalance and to produce a fault indication signal (411) when the evaluation of the supply line voltage unbalance satisfies a predetermined condition.

2. A device according to claim 1, wherein said voltage unbalance diagnostic circuit (41) comprises a voltage unbalance computation circuit (45) which is configured to produce a voltage unbalance factor (VUF) or a complex voltage unbalance factor (CVUF) using symmetrical component analysis of the supply line voltage signal, and to produce a voltage unbalance signal (451)..

3. A device according to claim 1, wherein said voltage unbalance diagnostic-circuit (41) comprises a Total Harmonic distortion calculator (46) which is configured to calculate the power of harmonic oscillations with higher order than the fundamental oscillation of the supply line voltage, and which produces a total harmonic distortion signal (461) from that calculation.

4. A device according to claim 1, wherein said device (30) comprises a voltage sag detection circuit (47) configured to produce a voltage sag indicator signal (471) from the supply line voltage measurement signal.

5. A device according to one of the preceding claims, wherein said voltage unbalance diagnostic circuit (41) further comprises an A/D-converter (42), and/or a Fourier Transform Calculator (43) configured to perform a discrete Fourier Transformation (DFT) or a Fast Fourier transformation (FFT) of the supply line voltage measurement signal, and/or a Root Mean Square calculator (44) configured to calculate the root mean square value of the supply line voltage measurement signal.

6. A device according to claim 1, wherein said voltage unbalance diagnostic circuit (41) further comprises a voltage unbalance signal processing unit (50) configured to produce the fault indication signal (411) when the total harmonic distortion signal (461) or the voltage unbalance signal (451) or both satisfy a predetermined condition.

7. Motor controller, providing motor control and motor protection functions, comprising an overload protection device (30) according to one of claims 1 to 6.

8. A method to be used with an overload protection device (30) to protect an electric load (20), especially an induction motor (20), in a load circuit comprising an electric supply line (A) providing a load current and the electric load (20), the device comprising first means (31) for deriving a load current measurement signal (311), and second means (33) for deriving an overload indicator signal (331) based on the load current measurement signal (311), the method comprising the steps of:

a. Measuring the supply line voltage and deriving a supply line voltage measuring signal,
b. Detecting a supply line voltage unbalance,
c. Evaluating the supply line voltage unbalance,
d. Producing a fault indication signal (411) when the evaluation of the supply line voltage unbalance satisfies a predetermined condition.

9. The method according to claim 8, comprising the further step of determining a' voltage unbalance factor (VUF) or a complex voltage unbalance factor (CVUF) using symmetrical component analysis of the supply line voltage signal.

10. The method according to claim 9, comprising the further step of producing a supply voltage quality indication from the voltage unbalance factor (VUF) or the complex voltage unbalance factor (CVUF), and producing the fault indication signal (411) when the supply voltage quality indication satisfies a predetermined condition.

11. The method according to claim 9, comprising the further step of producing a safe operating conditions indication and/or a derating factor from the voltage unbalance factor (VUF) and producing the fault indication signal (411) when the safe operating conditions indication and/or the derating factor satisfies a predetermined condition.

12. The method according to claim 8, comprising the further step of deriving a total harmonic distortion factor (THD) from the power of harmonic oscillations with higher order than the fundamental oscillation of the supply line voltage.

**13.** The method according to claim 12, comprising the further step of producing a losses and/or winding temperature and/or Torsional vibration indicator from the total harmonic distortion factor (THD), and producing the fault indication signal (411) when the losses and/or winding temperature and/or Torsional vibration indicator satisfies a predetermined condition.

**14.** Computer program with program code configured to execute the method according to claim 8, if the program is run on a computer or microprocessor.

**15.** Computer program product with program code configured to execute the method according to claim 8, if the program is run on a computer or microprocessor.

A

10

11

30

20

Fig. 1

A

31

40

311

33

401

331

11

411

50

41

30

**Fig. 2**

A

401

41

42

44

43

45

471

47

461

46

451

48

411

**Fig. 3**

# EP 2 290 776 A1

**EUROPEAN SEARCH REPORT**

Europäisches
Patentamt
European
Patent Office
Office européen
des brevets

Application Number

EP 09 01 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2009/119036 A1 (JAYANTH NAGARAJ [US] ET AL) 7 May 2009 (2009-05-07)<br>* paragraphs [0117], [0119], [0122], [0126], [0128], [0133] - [0135], [0140], [0143], [0165], [0168]; figures 4,9,13 *<br>* paragraphs [0200] - [0207]; figures 20,21 * | 1,7,8, 14,15<br>2-6,9-13 | INV.<br>H02H7/08 |
| Y<br>A | US 6 493 644 B1 (JONKER RENE T [CA] ET AL) 10 December 2002 (2002-12-10)<br>* column 21, paragraph 29-37 *<br><br>* column 26, line 19 - column 28, line 54 * | 2,5,6,9, 10<br>3,4,12, 13 | |
| Y | DATABASE INSPEC [Online]<br>THE INSTITUTION OF ELECTRICAL ENGINEERS, STEVENAGE, GB; January 2000 (2000-01),<br>HART D G ET AL: "Tapping protective relays for power quality information"<br>XP002602343<br>Database accession no. 6502375<br>* the whole document *<br>-& IEEE COMPUTER APPLICATIONS IN POWER IEEE USA,<br>vol. 13, no. 1, January 2000 (2000-01), pages 45-49, XP002602344<br>ISSN: 0895-0156 DOI: DOI:10.1109/67.814666 | 3,4,12, 13 | TECHNICAL FIELDS SEARCHED (IPC)<br><br>H02H<br>G01R |
| Y | DATABASE INSPEC [Online]<br>THE INSTITUTION OF ELECTRICAL ENGINEERS, STEVENAGE, GB; 2005,<br>FAIZ J ET AL: "Precise derating of three-phase induction motors with unbalanced voltages"<br>XP002602345<br>Database accession no. 8671671<br>* abstract * | 11 | |

-/--

The present search report has been drawn up for all claims

| Place of search | Date of completion of the search | Examiner |
|---|---|---|
| The Hague | 15 October 2010 | Tille, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 01 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | -& FAIZ J ET AL: "Precise derating of three-phase induction motors with unbalanced voltages" CONFERENCE RECORD OF THE 2005 IEEE INDUSTRY APPLICATIONS CONFERENCE FORTIETH IAS ANNUAL MEETING (IAS 2005), vol. 1, 2 October 2005 (2005-10-02), - 6 October 2005 (2005-10-06) pages 485-491, XP002602346 KOWLOON, HONG KONG, CHINA ISBN: 0-7803-9208-6 * page 489, left-hand column, paragraph 7 - page 490, left-hand column, paragraph 1; figure 7; table 2 * ----- | | |
| A | PILLAY P ET AL: "Definitions of Voltage Unbalance" IEEE POWER ENGINEERING REVIEW, IEEE INC, NEW YORK, US LNKD- DOI:10.1109/39.920965, vol. 21, no. 5, 1 May 2001 (2001-05-01), pages 50-51, XP011092198 ISSN: 0272-1724 * the whole document * ----- | 2,9,10 | |
| A,D | EP 0 477 959 A2 (ALLEN BRADLEY CO [US]) 1 April 1992 (1992-04-01) * the whole document * ----- | 1,8,14, 15 | TECHNICAL FIELDS SEARCHED (IPC) |

The present search report has been drawn up for all claims

| Place of search | Date of completion of the search | Examiner |
|---|---|---|
| The Hague | 15 October 2010 | Tille, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 09 01 0147

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2010

| Patent document cited in search report | | Publication date | Patent family member(s) | | Publication date |
|---|---|---|---|---|---|
| US 2009119036 | A1 | 07-05-2009 | AU | 2008325240 A1 | 14-05-2009 |
| | | | EP | 2220372 A1 | 25-08-2010 |
| | | | WO | 2009061370 A1 | 14-05-2009 |
| US 6493644 | B1 | 10-12-2002 | CA | 2299002 A1 | 09-02-2001 |
| EP 0477959 | A2 | 01-04-1992 | CA | 2050223 A1 | 28-03-1992 |
| | | | DE | 69124723 D1 | 27-03-1997 |
| | | | DE | 69124723 T2 | 04-09-1997 |
| | | | JP | 4255414 A | 10-09-1992 |
| | | | MX | 174119 B | 21-04-1994 |

EPO FORM P0459

For more details about this annex : see Official Journal of the European Patent Office, No. 12/82

**EP 2 290 776 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19748627 A1

- EP 0477959 A2